# EUROPÄISCHE PATENTANMELDUNG

(11) **EP 2 146 407 A1**
(43) Veröffentlichungstag der Anmeldung: **20.01.2010**
(21) Anmeldenummer: 08017748.8
(22) Anmeldetag: 09.10.2008
(51) Int. Cl.: H01S 3/223

(54) **Gasgemisch zum Betreiben eines Kohlendioxid-Lasers**

(30) Priorität: 15.07.2008 DE 102008033299
(71) Anmelder: Linde AG, 80331 München (DE)
(72) Erfinder: Herrmann, Johann, 85716 Unterscheißheim (DE); Diehl, Hans-Jürgen Dr., 82110 Germering (DE)

(57) **Zusammenfassung**

Um ein zum Betreiben eines Kohlendioxidlasers bestimmtes Gasgemisch, aufweisend die Bestandteile Kohlendioxid (CO₂), Stickstoff (N₂) und Helium (He), bereitzustellen, bei dem die chemischen Eigenschaften sowie das Reaktionsverhalten verbessert werden, insbesondere die Gasentladung gefördert sowie das Kohlendioxid (CO₂) effektiver angeregt wird, wird Krypton (Kr) als weiterer Bestandteil vorgeschlagen.

## Beschreibung

### Technisches Gebiet

Die vorliegende Erfindung betrifft ein zum Betreiben eines Kohlendioxidlasers bestimmtes Gasgemisch, aufweisend die Bestandteile Kohlendioxid (CO₂), Stickstoff (N₂) und Helium (He).

### Stand der Technik

Grundsätzlich strömt bei Kohlendioxidlasern (CO₂-Lasern) durch den Laserresonator (sogenannte Kavität) ein Gasgemisch mit Kohlendioxid (CO₂). Als weitere Komponenten sind Stickstoff (N₂) und Helium (He) zugegeben und weiterhin oft auch Komponenten, wie etwa Sauerstoff (O₂), Wasserstoff (H₂), Kohlenmonoxid (CO) und/oder Xenon (Xe). Dieses Gasgemisch wird auch als Laserbetriebsgas, als Kavitätsgas oder etwas ungenau als Lasergas bezeichnet.

Üblicherweise weist das Gasgemisch beispielsweise einen Anteil von etwa zwei Volumenprozent (Vol.-%) bis etwa 15 Vol.-% Kohlendioxid, von etwa zwölf Vol.-% bis etwa 60 Vol.-% Stickstoff, von einigen wenigen Volumenprozent Sauerstoff, Wasserstoff, Kohlenmonoxid und/oder Xenon und im verbleibenden Volumenanteil Helium auf.

Im Detail weist das Betriebsgas von Kohlendioxidlasern in der Regel mindestens drei Gaskomponenten auf, nämlich laseraktives Kohlendioxid (CO₂), als Zwischenspeicher für die elektrische Anregungsenergie dienenden Stickstoff (N₂) und die Wärmeableitung verbesserndes Helium (He).

Neben diesen Bestandteilen sind bisweilen auch Sauerstoff (O₂) und Kohlenmonoxid (CO) im Laserbetriebsgas enthalten. Mit diesen Komponenten kann der Oxidationsdruck eingestellt werden, und es ergibt sich ein relativ konstanter Kohlendioxidanteil im Laserbetriebsgas, weil durch die Betriebsbedingungen dissoziiertes und dadurch fehlendes Kohlendioxid durch die Oxidation von Kohlenmonoxid auch wieder gebildet wird.

Anteile von Wasserstoff (H₂) in der Betriebsgaszusammensetzung werden meist dann benötigt, wenn Katalysatoren im Betriebsgaskreislauf integriert sind.

Neben diesen Bestandteilen ist teilweise auch das Edelgas Xenon (Xe) in solchen Betriebsgasgemischen vorzufinden. Xenon ist leichter zu ionisieren als die anderen vorgenannten Gase, wird dann in den angelegten Feldern beschleunigt und führt über Stöße zu einer Gasentladung sowie zu einer effektiven Anregung des Kohlendioxids.

Mithin werden dem Lasergas aus Kohlendioxid, Stickstoff und Helium zusätzlich, Kohlenmonoxid, Sauerstoff oder Wasserstoff und möglicherweise Xenon zugemischt, um die chemischen Eigenschaften der Gase und ihr Reaktionsverhalten zu verbessern. Die Zusatzgase wirken hierbei auf das chemische Gleichgewicht bei der Zersetzung und Rekombination zum Beispiel des Kohlendioxids, dienen als Ionenspender und/oder verbessern die Wärmeableitung.

Die Wirkung von Xenon wird in Peter O. Clark, J. Wada, "The influence of Xenon on sealed-off CO2 lasers", Journal of Quantum Electronics, volume 4, issue 5, May 1968, beschrieben: Unter anderem wird die Leitfähigkeit bei der Entladung erhöht und eine höhere Elektronendichte erzielt, ohne die Elektronentemperatur wesentlich über den optimalen Wert zu erhöhen. Das geringe Ionisationspotential und der große Wirkungsquerschnitt machen Xenon zur wichtigen Elektronenquelle.

Damit kann die Anzahl der Kohlendioxidionen, der Sauerstoffionen und der Kohlenmonoxidionen reduziert und der "Verbrauch" des Laserbetriebsgases vermindert werden, wobei unter anderem Oxidation und Kathodenzerstäubung eine Rolle spielen.

Lasergase mit Xenonanteil werden bei geschlossenen Lasern geringerer Leistung eingesetzt, aber auch bei Hochleistungslasern mit "Lasergasverbrauch", die regelmäßige Frischgaszufuhr benötigen, wie zum Beispiel bei Slablasern mit Leistungen bis zu etwa acht Kilowatt (bei einem Slablaser weist das aktive Medium die Form einer Platte (englisch "slab") auf; der Laserstrahl durchläuft das plattenförmige Medium mehrmals im Zickzack zwischen schmalen Spiegeln; der Vorteil dieser Laserform ist die bessere Kühlbarkeit des Lasermediums).

Die durch die Beimengung von Xenon erzielbare Leistungssteigerung und der damit verbundene Nutzen haben jedoch Grenzen, außerhalb derer sich der Einsatz von Xenon nicht mehr wirtschaftlich darstellen lässt. Der Anwender müsste also mit einer Leistungsreduzierung seiner Laseranlagen konfrontiert werden, was eine Produktivitätssenkung zur Folge hätte und sogar dazu führen kann, dass bestimmte Materialstärken nicht mehr geschnitten werden oder geforderte Einschweißtiefen nicht mehr erreicht werden können.

Zum technologischen Hintergrund der vorliegenden Erfindung wird auf die Druckschrift DE 16 14 253 aus dem Stand der Technik aufmerksam gemacht.

### Darstellung der vorliegenden Erfindung:

### Aufgabe, Lösung, Vorteile, bester Weg zur Ausführung

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Gasgemisch der eingangs genannten Art bereitzustellen, welches einen vorteilhaften Betrieb eines Kohlendioxidlasers ermöglicht.

Diese Aufgabe wird durch ein Gasgemisch mit den im Anspruch 1 angegebenen Merkmalen gelöst. Vorteilhafte Ausgestaltungen und zweckmäßige Weiterbildungen der vorliegenden Erfindung sind in den abhängigen Ansprüchen gekennzeichnet.

Erfindungsgemäß wird also vorgeschlagen, das farblose und ungiftige Edelgas Krypton (Kr) als Lasergaskomponente zu verwenden. Mithin basiert die vorliegende Erfindung auf der Beimischung oder Zugabe von Krypton zum Betriebsgas für einen Kohlendioxidlaser.

Vorteilhafterweise wird Krypton Xenon ganz oder zumindest teilweise im Laserbetriebsgas ersetzen. Mit der Erfindung wird es also möglich, dass im Laserbetriebsgas auf Xenon zumindest partiell verzichtet werden kann. Das erfindungsgemäße Gasgemisch ist ein Betriebsgasgemisch, bei welchem das Kohlendioxid effektiv angeregt wird und der wirksame Kohlendioxidanteil im Betriebsgasgemisch stabil bleibt. Trotz eines zumindest partiellen Verzichts von Xenon im Laserbetriebsgas wird es also mit der Erfindung möglich, dass mit dem Laser ein Laserstrahl erzeugt wird, welcher in der Leistung, in der Strahlqualität und in der Konstanz einem mit einem herkömmlichen Betriebsgasgemisch erzeugten Laserstrahl in nichts nachsteht.

Krypton ist im Vergleich zu Xenon zwar etwas schwerer zu ionisieren, und Krypton ist mit einer Atommasse von 83,798 u auch etwas leichter als Xenon mit einer Atommasse von 131,293 u; dies kann jedoch teilweise durch größere Anteile am Lasergasgemisch kompensiert werden. Dadurch, dass Krypton im Vergleich zu Xenon erheblich preisgünstiger ist, ergibt sich ein wirtschaftlicher Vorteil, wenn Xenon ganz oder teilweise durch Krypton ersetzt wird. Besonders von Vorteil ist es, wenn Krypton zum Beispiel aus der höhersiedenden Sauerstoff-Fraktion beim Linde-Verfahren gewonnen wird.

Krypton weist mit 13,999 Elektronenvolt (eV) eine geringfügig höhere lonisierungsenergie als Xenon mit 12,130 eV auf; des Weiteren weist Krypton zwar einen (nur) etwas geringeren Atomradius, jedoch mit 9,49 Milliwatt pro Meter und pro Kelvin eine fast doppelt so hohe Wärmeleitfähigkeit wie Xenon mit 5,69 Milliwatt pro Meter und pro Kelvin auf.

Ein zumindest partieller Ersatz von Xenon durch Krypton im Lasergasgemisch reduziert die Gaskosten erheblich und ermöglicht Kostenvorteile.

Von Vorteil ist ein Volumenanteil an Krypton, der um das 1,2-fache bis vierfache, vorzugsweise das 1,5-fache bis dreifache über dem durch Krypton ersetzten Volumenanteil an Xenon liegt.

Gemäß einer bevorzugten Ausgestaltungsform der vorliegenden Erfindung kann das Gasgemisch als fertiges Betriebsgasgemisch geliefert werden. Alternativ hierzu kann das Gasgemisch aus Einzelkomponenten am Kohlendioxidlaser und/oder im Kohlendioxidlaser gemischt werden, wobei das Gasgemisch aus Vorgemischen und/oder aus Einzelkomponenten am Kohlendioxidlaser und/oder im Kohlendioxidlaser gemischt werden kann.

In einer zweckmäßigen Ausführungsform der vorliegenden Erfindung kann der Kohlendioxidlaser kontinuierlich und/oder ständig mit frischem Gas versorgt werden. Alternativ hierzu kann der Kohlendioxidlaser nach bestimmten Zeit(intervall)en und/oder bei verschiedenen Gaszuständen mit frischem Gas versorgt werden.

Vorteilhafterweise kann das Gasgemisch fest im Laserresonator oder in der Kavität eingeschlossen sein. Alternativ oder ergänzend hierzu kann das Gasgemisch in einen neuen Resonator oder in eine neue Kavität eingeschlossen an den Anwender geliefert werden.

In bevorzugter Weiterbildung der vorliegenden Erfindung weist das Gasgemisch die Komponenten Kohlendioxid (CO₂), Stickstoff (N₂), Helium (He) und Krypton (Kr) auf, wobei zusätzlich weitere gasförmige Bestandteile zugegeben werden können, so etwa
- Kohlenmonoxid (CO) oder
- Kohlenmonoxid (CO) und Sauerstoff (O₂) oder
- Kohlenmonoxid (CO), Sauerstoff (O₂) und Xenon (Xe).
- Kohlenmonoxid (CO) und Wasserstoff (H₂) oder
- Kohlenmonoxid (CO), Wasserstoff (H₂) und Xenon (Xe).

Exemplarisch kann das Laserbetriebsgasgemisch beispielsweise einen Anteil
- von etwa zwei Volumenprozent (Vol.-%) bis etwa 15 Vol.-% Kohlendioxid,
- von etwa zwölf Vol.-% bis etwa 60 Vol.-% Stickstoff,
- von einigen wenigen Volumenprozent Krypton, insbesondere von etwa einem Vol.-% bis etwa fünf Vol.-% Krypton, zum Beispiel von etwa zwei Vol.-% bis etwa vier Vol.-% Krypton, wie etwa von etwa drei Vol.-% Krypton, und
- und optional von einigen wenigen, beispielsweise jeweils in einem Bereich von eins bis zehn, insbesondere von zwei bis sechs Volumenprozent Kohlenmonoxid, optionalerweise weiterhin mit Sauerstoff oder Wasserstoff angereichert, sowie im verbleibenden Volumenanteil Helium aufweisen.

Ein bevorzugtes Ausführungsbeispiel für eine Laserbetriebsgasmischung gemäß der vorliegenden Erfindung weist
- etwa vier Vol.-% Kohlendioxid,
- etwa neunzehn Vol.-% Stickstoff,
- etwa 65 Vol.-% Helium,
- etwa drei Vol.-% Krypton,
- etwa sechs Vol.-% Kohlenmonoxid und
- etwa drei Vol.-% Sauerstoff
auf.

Ein weiteres bevorzugtes Ausführungsbeispiel für eine Laserbetriebsgasmischung gemäß der vorliegenden Erfindung weist
- etwa 4,75 Vol.-% Kohlendioxid,
- etwa dreizehn Vol.-% Stickstoff,
- etwa 74,5 Vol.-% Helium,
- etwa drei Vol.-% Krypton und
- etwa 4,75 Vol.-% Kohlenmonoxid
auf.

Die vorliegende Erfindung betrifft des Weiteren einen Kohlendioxidlaser, betrieben mit mindestens einem Gasgemisch gemäß der vorstehend dargelegten Art.

Die vorliegende Erfindung betrifft des Weiteren ein Verfahren zum Betreiben eines Kohlendioxidlasers mit mindestens einem Gasgemisch gemäß der vorstehend dargelegten Art.

Die vorliegende Erfindung betrifft schließlich die Verwendung mindestens eines Gasgemisches gemäß der vorstehend dargelegten Art in einem Kohlendioxidlaser gemäß der vorstehend dargelegten Art.

## Patentansprüche

1. Zum Betreiben eines Kohlendioxidlasers bestimmtes Gasgemisch, aufweisend die Bestandteile Kohlendioxid (CO₂), Stickstoff (N₂) und Helium (He),
**gekennzeichnet durch**
Krypton (Kr) als weiteren Bestandteil.

2. Gasgemisch gemäß Anspruch 1, **gekennzeichnet durch**
- etwa zwei Volumenprozent (Vol.-%) bis etwa 15 Vol.-% Kohlendioxid,
- etwa zwölf Vol.-% bis etwa 60 Vol.-% Stickstoff,
- einige wenige Volumenprozent Krypton, insbesondere etwa ein Vol.-% bis etwa fünf Vol.-% Krypton, zum Beispiel etwa zwei Vol.-% bis etwa vier Vol.-% Krypton, wie etwa drei Vol.-% Krypton, und
- im verbleibenden Volumenanteil Helium.

3. Gasgemisch gemäß Anspruch 1 oder 2, **gekennzeichnet durch** Kohlenmonoxid (CO) und/oder Sauerstoff (O₂) und/oder Wasserstoff (H₂) und/oder Xenon (Xe) als weitere Bestandteile.

4. Gasgemisch gemäß mindestens einem der Ansprüche 1 bis 3, **gekennzeichnet durch**
- etwa vier Vol.-% Kohlendioxid,
- etwa neunzehn Vol.-% Stickstoff,
- etwa 65 Vol.-% Helium,
- etwa drei Vol.-% Krypton,
- etwa sechs Vol.-% Kohlenmonoxid und
- etwa drei Vol.-% Sauerstoff.

5. Gasgemisch gemäß mindestens einem der Ansprüche 1 bis 3, **gekennzeichnet durch**
- etwa 4,75 Vol.-% Kohlendioxid,
- etwa dreizehn Vol.-% Stickstoff,
- etwa 74,5 Vol.-% Helium,
- etwa drei Vol.-% Krypton und
- etwa 4,75 Vol.-% Kohlenmonoxid.

6. Gasgemisch gemäß mindestens einem der Ansprüche 1 bis 5, **dadurch gekennzeichnet, dass** das Gasgemisch als fertiges Laserbetriebsgasgemisch oder als fertiges Kavitätsgasgemisch lieferbar ist.

7. Gasgemisch gemäß mindestens einem der Ansprüche 1 bis 5, **dadurch gekennzeichnet, dass** das Gasgemisch aus einzelnen Bestandteilen und/oder Vorgemischen am Kohlendioxidlaser und/oder im Kohlendioxidlaser mischbar ist.

8. Gasgemisch gemäß mindestens einem der Ansprüche 1 bis 7, **dadurch gekennzeichnet, dass** der Kohlendioxidlaser kontinuierlich und/oder ständig mit frischem Gasgemisch versorgt wird.

9. Gasgemisch gemäß mindestens einem der Ansprüche 1 bis 7, **dadurch gekennzeichnet, dass** der Kohlendioxidlaser nach bestimmten Zeiten oder nach bestimmten Zeitintervallen und/oder bei verschiedenen Gaszuständen mit frischem Gas versorgt wird.

10. Gasgemisch gemäß mindestens einem der Ansprüche 1 bis 9, **dadurch gekennzeichnet, dass** der Kohlendioxidlaser bei verschiedenen Gaszuständen mit frischem Gas versorgt wird.

11. Gasgemisch gemäß mindestens einem der Ansprüche 1 bis 10, **dadurch gekennzeichnet, dass** das Gasgemisch fest im Laserresonator oder fest in der Kavität eingeschlossen ist.

12. Gasgemisch gemäß mindestens einem der Ansprüche 1 bis 11, **dadurch gekennzeichnet, dass** das Gasgemisch in einen neuen Laserresonator oder in eine neue Kavität eingeschlossen lieferbar ist.

13. Kohlendioxidlaser, betrieben mit mindestens einem Gasgemisch gemäß mindestens einem der Ansprüche 1 bis 12.

14. Verfahren zum Betreiben eines Kohlendioxidlasers mit mindestens einem Gasgemisch gemäß mindestens einem der Ansprüche 1 bis 12.

15. Verwendung mindestens eines Gasgemisches gemäß mindestens einem der Ansprüche 1 bis 12 in einem Kohlendioxidlaser gemäß Anspruch 13.
